# EUROPEAN PATENT APPLICATION

(11) **EP 4 734 398 A1**
(43) Date of publication of application: **29.04.2026**
(21) Application number: 24208067.9
(22) Date of filing: 22.10.2024
(51) Int. Cl.: H04B 7/185, H04L 47/20, H04W 84/06

(54) **A NETWORK NODE FOR PARTICIPATING IN AN OVERLAY NETWORK**

(71) Applicant: Siemens Aktiengesellschaft, 80333 München (DE)
(72) Inventor: Huth, Hans-Peter, 80638 München (DE); Magalhães Guimarães, Carlos Eduardo, 69121 Heidelberg (DE); Sauer, Markus, 81739 München (DE); Zeiger, Florian, 85635 Höhenkirchen-Siegertsbrunn (DE)
(74) Representative: Siemens Patent Attorneys

(57) **Abstract**

The proposed embodiments relate to a network node in a mobile communication system, for participating in an overlay network to enforce application-specific policies. The network node, participating in an overlay network to enforce application-specific policies, includes a network interface module for data packet exchange, an underlay plane module for default packet handling and interaction with the overlay plane, and an overlay plane module to manage routing, prioritizing, forwarding, and dropping of packets based on traffic requirements. The proposed embodiments are particularly advantageous when the communication system includes non-terrestrial components, such as satellite communication. The embodiments enable dynamic agreements with satellite operators, reserving limited bandwidth for critical traffic while managing the rest on a pay-as-you-go basis. The proposed overlay abstraction improves responsiveness in adapting application overlay networks to changing requirements. Additionally, these embodiments conceal domain-specific knowledge from service and satellite providers, aligning with privacy demands in industrial business applications.

## Description

### Technical Field

The disclosed embodiments pertain to the field of network communications, particularly in satellite communication systems. More specifically, the disclosed embodiments relate to a network node designed for participating in an overlay network.

### Background Art

Presently operated Non-Terrestrial Networks (NTNs) or satellite networks operate as closed systems where packet forwarding and routing are governed solely by policies imposed by the operator of the network. This may be a challenge for an entity operating within a specific industry or market segment and which is hereinafter also referred to as a vertical entity.

A vertical entity refers to an entity or organization that operates within a specific industry or market segment and utilizes satellite services or Non-Terrestrial services to enhance its operations. This entity may contract satellite services to meet its unique requirements, such as communication, data transmission, or other specialized services, and seek to have more control over how these services are managed and delivered. The term »vertical« highlights that the entity may be focused on a particular industry segment, as opposed to a horizontal player that may operate across multiple industries. For example, a vertical entity may be a telecommunications company, a media broadcaster, a logistics provider, or a manufacturing company that relies on satellite networks to support its business activities. Even though a vertically operating entity may secure satellite services with specific Service Level Agreements (SLAs), these agreements are applied uniformly and transparently within the satellite network. The entity lacks the capability to exercise fine-grained control over the contracted network, such as through multiplexing data streams, network slicing or dedicated resources.

With an anticipated integration of satellite networks into the 6G (sixth generation) mobile architecture, a convergence of Terrestrial and Non-Terrestrial Networks (TN-NTN) will occur. This evolution will create an architecture that integrates multiple layers of connectivity, including terrestrial (ground-based) and non-terrestrial (space-based) components, forming a three-dimensional network structure. This structure is expected to provide more comprehensive and flexible coverage. However, despite this convergence, the Non-Terrestrial Network (NTN) domain is likely to remain predominantly closed and inaccessible to external or third-party entities. Consequently, traffic flows with varying requirements will be intermixed within the same contracted network, without any control from the entity over the traffic flow between the entry and exit points within the satellite network.

This issue is further compounded in scenarios involving Direct-to-Device (D2D) communication, where devices interact directly with satellites without terrestrial infrastructure support. In such cases, the entity vertical cannot enforce centralized control and scheduling of different traffic flows before they enter the satellite network, which is essential for maintaining some degree of control over a fully decentralized distribution of its devices. While it may be possible to establish multiple contractual services for different traffic flows or device priorities, this approach is likely to be more costly, less flexible in dynamic scenarios, and more complex to manage through automated mechanisms.

Accordingly, there is a need in the art to leverage emerging satellite computing capabilities to mitigate these limitations identified above. Specifically, there is a need in the art to provide a vertical entity with enhanced control over their traffic whenever it is routed or forwarded across a satellite network. Furthermore, it is desirable to implement a network overlay that operates beyond -or rather, on top of - the closed Non-Terrestrial Network (NTN) system. This overlay should be capable of being instantiated and managed by the vertical entity, operating independently in the range of the NTN system's capabilities and without necessitating the disclosure of topological information to the satellite operator.

### Summary of the Invention

According to an embodiment, a network node in a mobile communication system is provided. The network node is participating in an overlay network across the mobile communication system. The overlay network is implemented to satisfy one or more application-specific policies or rule. The network node includes:
- at least one network interface module configured to exchange one or more data packets with other network nodes across the mobile communication system;
- an underlay plane module configured to,
   - pass the one or more data packets through the network node according to provider-specific rules in a default configuration, and,
   - exchange the one or more data packets with an overlay plane module;
- the overlay plane module implemented to enforce at least one application-specific policy imposed to at least one of a routing, prioritizing, forwarding, and dropping of the one or more data packets in accordance with a traffic requirement assigned to the one or more data packets.

An advantage of the network node participating in the overlay plane according to the embodiments is that the overlay plane allows application owners or vertical entities to customize the communication system according to their specific needs without altering the provider's underlying rules and policies. The overlay network or overlay plane connecting the network nodes is formed by a number of communicatively connected overlay network modules. These modules, as specified by the embodiments, are provided in at least one participating network node. The overlay plane thus offers an overlay network or overlay plane that can be customized by an application owner or a vertical entity according to their specific requirements and needs. This overlay network may utilize the underlay plane or underlay network of the provider, particularly a satellite provider, merely as a transport layer, without necessitating changes to the provider's rules and policies. The provider's rules and policies are often agreed upon in a service level agreement or SLA, which is typically established with a large number of participants and therefore tends to be very rigid.

The overlay plane superimposing the underlay plane of the communication system - typically a closed satellite communication system or non-terrestrial network - may be instantiated and managed by a vertical entity, thereby operating independently of the capabilities of the communication system - including, e.g., software-defined networking or even software-defined satellites - and without requiring the satellite operator to disclose topological information. Given that satellite orbits, locations, and inter-satellite connectivity are known - or can be inferred with less dependency on the network operator compared to terrestrial counterparts - the embodiments are less susceptible to changes in network infrastructure and operator dependency.

### Brief Description of the Drawing

The objects as well as further advantages of the present invention will become more apparent and readily appreciated from the following description of the preferred embodiments, taken in conjunction with the accompanying drawing accompanying drawing of which:
- FIG. 1: illustrates a schematic diagram of functional units participating in a mobile communication system according to an embodiment;
- FIG. 2: illustrates a schematic a schematic process chart depicting an exchange of data transmissions for operating a mobile communication system according to an embodiment; and;
- FIG. 3: illustrates a schematic diagram of functional units participating in a mobile communication system according to the state of the art.

### Description of Examples

The embodiments described herein may be instantiated and managed by a vertical entity, thus operating independently of the capabilities of a network provider.

Although the following description is primarily based on satellite systems, the present embodiments are not confined to such systems. The proposed embodiments are, in fact, so broadly applicable that they may be utilized to any wireless communication network which is, either partially or as a whole, controlled by a provider and where there is a need to adapt the provider policies to the requirements of a vertical entity.

In their most general form, the embodiments comprise a network node including a network interface module, an underlay plane module, and an overlay plane module. It is immaterial whether a network node is embodied in a satellite, a ground station, a switch, an access point, a radio unit or any spaceborne, airborne or groundborne network node. The network node need not have any association with a satellite system and, specifically, does not require a satellite as either a direct or indirect communication partner.

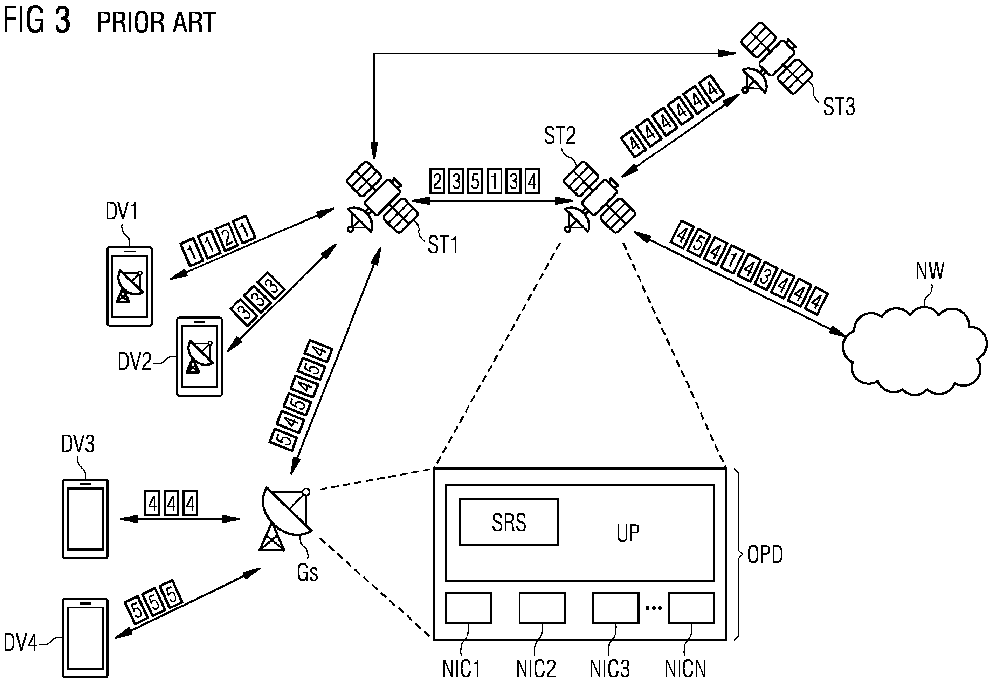

FIG. 3 illustrates a known satellite communication systems which may typically include one or more satellites ST1, ST2, ST3 and one or more ground stations GS. One or more devices DV1, DV2, DV3, DV4 as shown in FIG. 3 may be understood as portable or non-portable devices and/or network nodes for bidirectionally exchanging data with each other or with other network nodes such as the satellites ST1, ST2, ST3 and/or ground station GS.

The devices DV1, DV2, DV3, DV4 may be operated by a user of the communication system - or in other words a vertical entity - which has an agreement with a provider of the satellite communication system. This agreement may offer the vertical entity an end-to-end (E2E) network slice within the satellite network according to a predefined service level agreement. In order to illustrate the specific needs of the vertical entity, four devices DV1, DV2, DV3, DV4 in the realm of the vertical entities are illustrated along with data packets being exchanged with current communication partners of the devices DV1, DV2, DV3, DV4. The first and the second device DV1, DV2 are exemplarily shown to exchange data with the first satellite ST1, the third and fourth device DV3, DV4 are exemplarily shown to exchange data with the ground station GS which itself communicates with the first satellite ST1.

The second satellite ST2 is depicted as having a data connection to a network outside the realm of the satellite communication network, such as the internet.

Satellites ST1, ST2, ST3 and ground station GS are each equipped with a computing environment that falls within an operator domain OPD. Although the computing environments implemented in a satellite and in a ground station within the operator domain OPD may differ from each other, it is according to FIG. 3 rightly assumed that both network node types - satellites ST1, ST2, ST3 and ground stations GS - have a commonly implemented computing environment which is accessible for extensions.

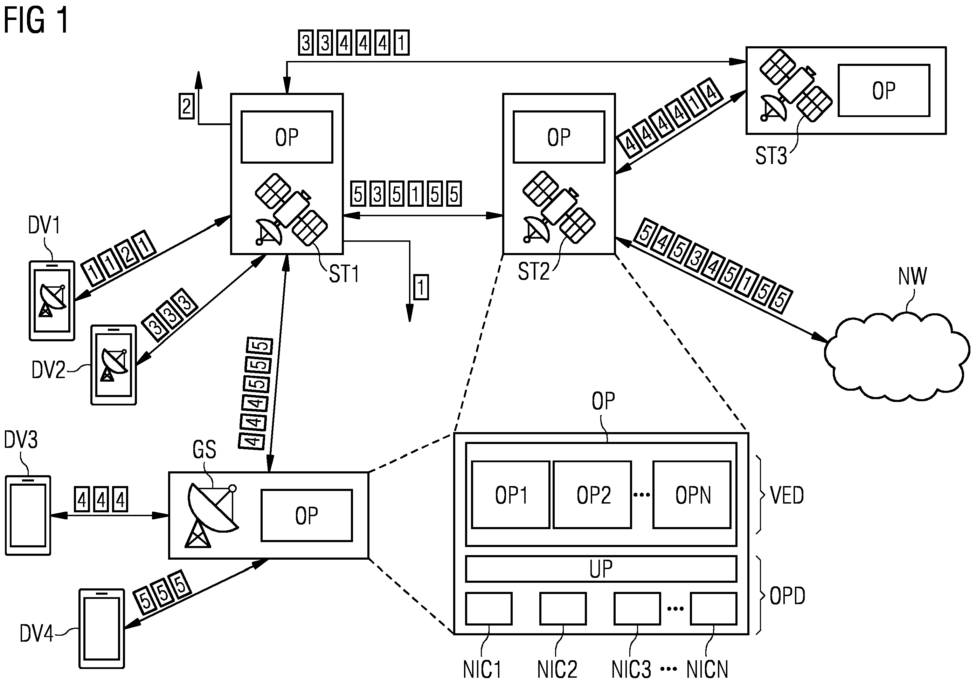

An implementation and operation of the operator domain OPD are the responsibility of the satellite system provider. The computing environment may include one or more network interface modules NIC1, NIC2, NIC3, ... NICN and a plane UP implementing service and/or satellite operator rules and/or policies. In anticipation of extensions described in FIG. 1, which involve the application of an »overlay« network, this plane UP implementing service and/or satellite operator rules and/or policies will hereinafter also be referred to as an underlay plane UP. Although certain known underlay planes UP may optionally support rule descriptions SRS being capable of defining rules set by a vertical entity, these rule descriptions SRS are essentially service agreements and are thus handled in a static manner. In any case, these rule descriptions SRS are not capable of actively influencing a handling and processing of traffic at each hop of a communication route.

Each of the devices DV1, DV2, DV3, and DV4 is assumed to have distinct traffic requirements, illustrated by rectangular data packets exchanged between the devices and their communication partners. These data packets are distinguished by a number within the rectangle, symbolizing the traffic requirements according to the following scheme:
1. The first device DV1 primarily exchanges data packets belonging to a non-critical stream which is symbolized by a number of 1 in the rectangular data packets exchanged by device DV1. Data packets belonging to the non-critical stream symbolized by a number of 1 may have very loose requirements, making even packet losses acceptable.
2. The first device DV1 occasionally exchanges data packets belonging to a non-critical stream which is symbolized by a number of 2 in the rectangular data packets. Data packets belonging to the non-critical stream symbolized by a number of 2 may have no bounded delay - meaning delivery may even take several minutes - but the delivery is guaranteed.
3. The second device DV2 exclusively exchanges data packets belonging to a stream which is symbolized by a number of 3 in the rectangular data packets. Data packets belonging to this stream symbolized by a number of 3 are required of being redundantly transmitted at the next hop of the transmission path.
4. The third device DV3 exchanges data packets belonging to a stream which is symbolized by a number of 4 in the rectangular data packets. Data packets belonging to this stream symbolized by a number of 4 contain video data from a camera with high bandwidth demands but are not bound to delay.
5. The third device DV4 exchanges data packets belonging to a stream which is symbolized by a number of 5 in the rectangular data packets. Data packets belonging to this stream symbolized by a number of 5 contain video data of a camera that are bound to delay.

As illustrated in FIG 3, the prior art communication system is unable to accommodate the distinct traffic requirements involving devices DV1, DV2, DV3, and DV4. This is most evident with data packets belonging to the stream symbolized by number 3. According to the traffic requirements of data packets symbolized by the number 3 they are required to be redundantly transmitted at the next hop - which is the first satellite ST1 - of the transmission path. However, these data packets are merely forwarded by the first satellite ST1 to the second satellite ST2, without establishing an additional redundant path - such as from the first satellite ST1 to the third satellite S3.

Known communication systems as depicted in FIG. 3 lack the ability to manage traffic flows with distinct requirements. These traffic flows are mixed with those from third entities within the same communication systems, without any control between the entry and exit points of the network traffic flows inside the satellite network.

FIG. 1 illustrates a satellite communication system according to an embodiment. In accordance with the structure as shown in FIG.1 the satellite communication system according to FIG. 3 is illustrated to include one or more satellites ST1, ST2, ST3 and one or more ground stations GS. One or more devices DV1, DV2, DV3, DV4 may be understood as portable or non-portable devices and/or network nodes for bidirectionally exchanging data with each other or with other network nodes such as the satellites ST1, ST2, ST3 and/or ground station GS.

The first and the second device DV1, DV2 are exemplarily shown to exchange data with the first satellite ST1, the third and fourth device DV3, DV4 are exemplarily shown to exchange data with the ground station GS which itself communicates with the first satellite ST1.

Each of the devices DV1, DV2, DV3, and DV4 is assumed to have distinct traffic requirements, illustrated by rectangular data packets exchanged between the devices and their communication partners. While the type and traffic requirements of the data packets exchanged between devices DV1, DV2, DV3, and DV4 and their immediate communication endpoints - i.e. the first satellite ST1 and the ground station GS - correspond to the data packets shown in FIG. 1, the scenario according to FIG. 3 reveals a different order of forwarded data packets after the first hop, i.e., the first immediate communication partner.

The most noticeable difference is a particular handling of data packets symbolized by the numbers 1 and 2 in the first satellite ST1. The data packet numbered 1, which belongs to a non-critical stream with very loose requirements, making even packet losses acceptable, is discarded - indicated by an arrow pointing right and downward - in the first satellite ST1. The packet numbered 2, although also belonging to a non-critical stream, but with guaranteed delivery, is stored - indicated by an arrow pointing left and upward - and forwarded.

Furthermore, in contrast to the scenario in FIG. 3, in the satellite system of FIG. 1, the data packet numbered 1 is indeed redundantly forwarded at satellite ST1 to the next hop of the transmission. An additional path is now established between the first satellite ST1 and the third satellite ST3, where the first data packet numbered 3 is redundantly transmitted alongside the data packet numbered 3 transferred between ST1 and ST2. It is therefore evident that the system depicted in FIG. 3 may be suitable for implementing traffic requirements regarding redundancy, priority etc. as specified by a vertical entity, without being subject to the traffic management guidelines of the provider. This benefit is due to an overlay network across the mobile communication system which is able to satisfy application-specific policies.

One key concept of the embodiments is to use a newly proposed component, an overlay plane OP, also referred to as Over-the-Top (OTT) Programmable Plane, to form an overlay network on top of the satellite system being an underlying access network.

One or more - preferably each - of the network nodes ST1, ST2, ST3, GS in the satellite system - or more generally, in the mobile communication system - may participate in an overlay network to satisfy application-specific policies. The network ST1, ST2, ST3, GS node includes:
- at least one network interface module NIC1, NIC2, NIC3,..., NICN to exchange data packets with other network nodes ST1, ST2, ST3, GS or devices DV1, DV2, DV3, DV4.
- an underlay plane module UP, which is implemented to pass data packets through the node according to provider-specific rules and exchange data packets with the overlay plane module OP. Preferably, an existing underlay plane module UP may be modified to forward received data packets to the corresponding overlay plane module OP for further processing, or, if none, to follow the service provider's default rules or policies.
- The overlay plane module OP enforces application-specific policies on routing, prioritizing, forwarding, and dropping data packets based on traffic requirements.

The network interface modules NIC1, NIC2, NIC3,..., NICN may be seen as an endpoint, i.e. entry and/or exit point, for connectivity between the devices DV1, DV2, DV3, DV4 and the satellites ST1, ST2, ST3, the satellites ST1, ST2, ST3 and the satellite earth / ground stations GS1, and satellites ST1, ST2, ST3 with other satellites ST1, ST2, ST3 in the same or different orbital planes or altitudes, enabling said network nodes to exchange data.

The network interface modules NIC1, NIC2, NIC3,... NICN may range from legacy network interface cards that provide basic connectivity to smart network interface cards with advanced computing facilities. While basic network interface cards lack advanced computing facilities, making it more suitable to run advanced overlay network features in computing resources of the overlay plane module OP, smart NICs may run these advanced features directly within the smart network interface itself. According to an embodiment using smart NICs, the overlay plane module OP may be instantiated directly within the smart NIC's Data Processing Unit or DPU.

The resulting overlay network may offer fine-grained control and capabilities over crossing data traffic. Thus, it enables the vertical entity, e.g. an application owner, to optimize and perform traffic steering, switching, and/or shaping, including forwarding and routing decisions within the satellite network according to its own business and application-specific traffic flow requirements. The vertical entity may enter into specific service level agreements with network operators, particularly satellite operators, for designated network links within the provider's network, regardless of whether these links are physical or logical.

Within these link service level agreements, the vertical entity can leverage the overlay plane OP, deployed over specific computing capabilities on board satellites. This overlay plane OP may be entirely decoupled from the network operator mechanisms, allowing the vertical entity to introduce its own traffic optimization mechanisms. This setup may service multiple End-To-End (E2E) application traffic flow requirements simultaneously.

The proposed concept enables the vertical entity to fully control the contracted network, optimizing traffic and tailoring it to specific needs without revealing domain knowledge to third parties. It also allows for flexible and rapid responses to new application demands, without needing to interface with the network operator, unless additional capacity is required.

The skilled artisan will recognize that the type of network nodes - whether airborne, spaceborne, or groundborne - is immaterial to the advantages that the present embodiments offer to a vertical entity. These advantages include the ability to instantiate, manage, and utilize communication systems independently of the capabilities or policies of the underlying carrier communication system. Existing solutions, in contrast, cannot fully provide fine-grained control and capabilities to a vertical entity over its own traffic flows. Even when such control and capabilities are offered, they remain limited in terms of the available traffic operations.

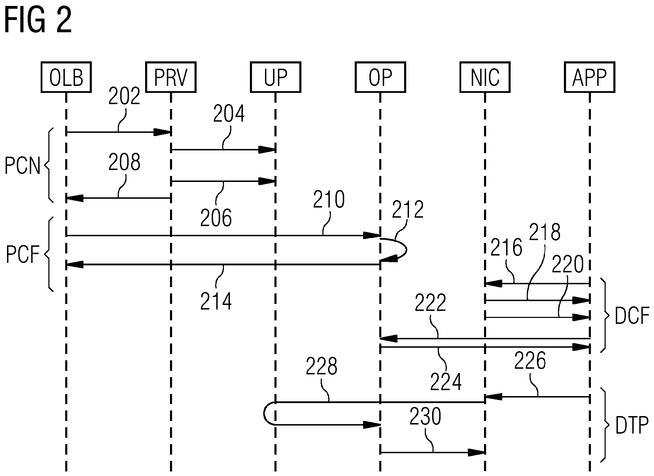

FIG. 2 illustrates a sequence diagram depicting a chronologically ordered exchange of control and data transfer transmissions amongst various functional units for operating a mobile communication system according to an embodiment, specifically for provisioning and managing an overlay network across the mobile communication system for satisfying one or more application-specific policies. In overlay network services, a multiplicity of entities is involved. Some entities belong to a service provider PRV or one or more service operators, such as network control agents or NCA - not shown in the drawing -. Other entities belong to a business owner or vertical entity, in the following commonly referred to as Overlay Business Owner OLB.

In FIG. 2, devices and/or applications assigned to the overlay business owner OLB are referred to as applications APP. One or more applications APP may be implemented in one or more devices such as shown in FIG. 1. As depicted in FIG. 2, an underlay plane UP, an overlay plane OP and a network interface layer NIC may participate in the message transfer for provisioning and managing an overlay network across the mobile communication system. Said three planes or layers - the underlay plane UP, the overlay plane OP, and the network interface layer NIC - may collectively form part of the overlay plane, also known as an Over-the-Top (OTT) Programmable Plane. A computing environment for executing the overlay plane for participating in the overlay network across the mobile communication system may be implemented in a satellite, in a ground station, or, more generally, in a network node.

The overlay plane OP as shown in FIG. 2 may consist of multiple overlay plane modules (OP1, OP2, ...OPN as shown in FIG 1) distributed across one or more network nodes, e.g. satellites and/or ground station forming a non-terrestrial communications system as an example of the proposed embodiments. Accordingly, the underlay plane UP may consist of multiple underlay planes (as shown in FIG 3) or underlay plane modules (in conformance with the modular design of the overlay plane) distributed across one or more network nodes. The network interface layer as shown in FIG. 2 may consist of multiple network interfaces (NIC1, NIC2, ... NICN as shown in FIG 1) distributed across one or more network nodes, e.g. satellites and/or ground station forming a non-terrestrial communications system as an example of the proposed embodiments.

The overlay business owner OLB may include one or more technical operators or policy providers of the vertical entity or the application owner. The overlay business owner OLB may comprise one or more engineering computers, capable of interacting with any components of the communication system shown in FIG. 2, at any location.

Similarly, the service provider PRV, which may include one or more service operators and/or network control agents, is depicted as a single administrative unit PRV for simplification purposes. However, the service provider PRV may comprise one or more engineering computers, capable of interacting with any components of the communication system shown in FIG. 2, at any location.

In the sequence diagram of FIG. 2 consecutive points in time are chronologically ordered, such that data points in time are further down than earlier points in time. For each of the functional units OLB, PRV, IP, OP, NIC, APP a respective vertical dash line is plotted in order to illustrate a message exchange of the respective functional unit in relation to the point in time. The sequence diagram, as depicted in FIG. 2, may represent the outcome of an overlay business owner OLB seeking to statically and dynamically gain control over the overlay plane to enforce at least one application-specific policy imposed to at least one of a routing, prioritizing, forwarding, and dropping of the one or more data packets in accordance with a traffic requirement assigned to the one or more data packets.

In a first step of the method as shown, the overlay business owner OLB may initiate a request for service provisioning according to a Service Level Agreement of the service provider PRV. In the course of this request being entered by the business owner OLB into a management system, e.g., via a console, a first request message 202 is transferred from the management system of the overlay business owner OLB to the management system of the service provider PRV.

Upon acceptance of the request by the service provider PRV, a second command message 204 may be transmitted from the service provider PRV to the underlay plane UP. This command instructs the underlay plane UP to allocate necessary resources to fulfill the service provisioning request in accordance with the Service Level Agreement submitted by the overlay business owner OLB. In a further step, a third command message 206 may be sent from the service provider PRV to the underlay plane UP instructing the underlay plane UP to define default rules for the overlay business owner OLB or end users. These default rules may may be applied to traffic endorsed by such the Service Level Agreement. The underlay plane UP, after having allocated resources and defined default rules as instructed, may give a feed-back - not shown - to the service provider PRV.

In a subsequent step, the service provider PRV may report to the overlay business owner OLB by transmitting a fourth report message 208. This fourth report message 208 may confirm that the agreement has been accepted and that the service provisioning according to the Service Level Agreement has been successfully concluded. This marks the end of a pre-conditions phase PCN.

Subsequently, the process may now advance into a pre-configuration phase PCF. In a subsequent step, a fifth configuration command message 210 may be sent from the overlay business owner OLB to the overlay plane OP for configuring the overlay plane OP. Thereby the overlay plane OP may be configured across the entire network according to specified requirements, including routing rules, queuing priorities, packet filtering, dropping rules, encapsulation etc. Said forwarding rules may also be referred to as »static« programmable rules, while other rules may be dynamic or stateful. In a sixth loop 212, the overlay plane OP may apply specified rules across the entire satellite network, i.e. implement the rules in every overlay plane module. The service configuration of the overlay plane OP may specifically include a creation of technical service configuration parameters. The service configuration may be configured based on requirements of the overlay plane OP services, such as reliability, end-to-end delay, packet loss, resilient data flows, security, and/or determinism. A service configuration may contain typical network parameters and network functions, such as configuration for routing procedures, queuing, prioritization, error correction, encryption, and/or redundancy mechanisms such as packet duplication/de-duplication.

After the process of rule implementation across the entire network has been successfully concluded, a seventh status confirmation message 214 is dispatched to the overlay business owner OLB confirming the overlay business owner OLB by the overlay plane OP that the rules have been applied correctly. This marks the end of the pre-configuration phase PCF.

Subsequently, the process may now advance into a dynamic configuration phase DCF during which authorized devices and/or applications may perform dynamic on in-line configurations or application-specific policies - as opposed to static rules being previously defined by the overlay business owner OLB - of how to handle traffic streams to be exchanged by the authorized devices and/or applications participating in the overlay network across the mobile communication system.

In a subsequent step, the application APP may request permission for the application and/or the device executing the application APP to be connected and registered in the mobile communication system by transmitting an eighth request message 216 to the network interface layer NIC. The application APP may specifically be an application APP assigned to the vertical entity in order to dynamically conclude the configuration of the overlay network and/or to enforce at least one application-specific policy imposed to at least one of a routing, prioritizing, forwarding, and dropping of the one or more data packets in accordance with a traffic requirement.

In a subsequent step, the network interface layer NIC may confirm a status to the application APP by transmitting a nineth confirmation message 218. This nineth confirmation message 218 may confirm that all rules have been accepted and successfully applied. In a subsequent step, the network interface layer NIC may send credentials to the application APP, if the application APP is entitled, by transmitting a tenth transmission message 220. This tenth transmission message 220 may include credentials for the application APP to dynamically configure programmable rules of the overlay plane OP.

In a subsequent step, the application APP may now define rules for traffic streams utilized by the application and/or the device executing the application APP by transmitting an eleventh definition message 222 to the overlay plane OP. The application APP may replace or amend the »static« rules defined by the vertical entity - thereby having utilized the fifth configuration command message 210 - by dynamically defining new or amended rules for the traffic flow of the application in order to enable advanced packet processing. After the process of dynamic rule implementation across the entire network has been successfully concluded, a twelfth status confirmation message 224 may be dispatched to the application APP confirming that the dynamic rules have been applied correctly. This marks the end of the dynamic configuration phase DCF.

The amended overlay plane OP rules and/or policies may be distributed across the overlay plane OP, e.g. across all network nodes, e.g. satellites. The amended overlay plane OP rules and/or policies may implement the technical service configuration parameters as previous defined for the static service implementation. They may may additionally feature a specific behavior of the overlay plane modules, e.g. on one or more satellite. This amended overlay plane OP rules and/or policies may encompass capabilities of traffic flow re-composition and/or re-routing for the overall traffic streams in the overlay plane OP. The overlay plane OP rules and policies may be defined by the application owner of the application APP. However, these rules and policies are typically not visible or distinguishable to a network and/or satellite operator. Examples of realization may include virtual network functions, serverless functions, in-network computing functions, virtualized stacks such as containers, application components, or any combination of these. This allows for domain-specific data flow and service optimization to be implemented according to QoS (Quality of Service) and QoE (Quality of Experience) requirements.

Subsequently, the process may now advance into an operational phase DTP of data traffic filtering and packet processing. In a subsequent step, a thirteenth data message 226 may submit a data stream from the application APP to the network interface layer NIC. In a subsequent step, a fourteenth data message 228 may forward one or more data packets of this data stream to the overlay plane OP which is implemented to enforce at least one application-specific policy in accordance with a traffic requirement assigned to the one or more data packets. The data packets are then forwarded via the underlay plane UP to other stations - or overlay plane modules - of different receiving network nodes along the route of the overlay plane OP.

In a subsequent step, a fifteenth data message 230 may submit another incoming data stream from the overlay plane OP to the network interface layer NIC. For this incoming data stream, data packets, or traffic in general, the overlay plane OP may likewise enforce respective application-specific rules and/or policies and forward the stream to a subsequent network node.

In summary, the disclosed embodiments relate to a network node in a mobile communication system, for participating in an overlay network to enforce application-specific policies. The network node, participating in an overlay network to enforce application-specific policies, includes a network interface module for data packet exchange, an underlay plane module for default packet handling and interaction with the overlay plane, and an overlay plane module to manage routing, prioritizing, forwarding, and dropping of packets based on traffic requirements.

The disclosed embodiments may advantageously assist a vertical entity - e.g., a business operating within a specific industry - in reducing its operational costs when different links within a satellite network incur varying expenses. For instance, Inter-Satellite Links or ISL in Geostationary Earth Orbit or GEO may be more costly than those in Low Earth Orbit or LEO. The embodiments provide mechanisms for making informed decisions on traffic routing within the satellite network.

Advantageously, the embodiments may facilitate a plurality of dynamic agreements with satellite operators. Under such agreements, only a limited bandwidth may be reserved for critical traffic, while the remaining bandwidth is managed under a pay-as-you-go scheme.

Furthermore, the vertical entity may obtain an end-to-end view of an application in operation, including the impact of each networking domain on overall end-to-end performance. This capability allows the vertical entity to finely control the performance of different networking segments and concurrent applications. For example, if a terrestrial networking segment experiences congestion, the vertical entity may re-route specific traffic to an alternative ground station connected to a less congested segment, thereby minimizing the overall impact on all running applications.

The overlay abstraction enhances responsiveness in adapting application overlay networks to evolving requirements. It also offers a unified interface for service or satellite providers, mitigating vendor lock-in and fostering interoperability across diverse providers. Additionally, the overlay abstraction provides a fundamental mechanism for outsourcing the contracted network to customers.

The embodiments also conceal domain-specific knowledge from the service and/or satellite providers, aligning well with privacy demands in industrial business applications. In summary, the embodiments may offer performance, efficiency, or cost benefits, and potentially pave the way for new services to customers.

It is to be understood that the elements and features recited in the appended claims may be combined in different ways to produce new claims that likewise fall within the scope of the present invention. Thus, whereas the dependent claims appended below depend on only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A network node in a mobile communication system, preferably a satellite communication system, the network node (ST1, ST2, ST3, GS) participating in an overlay network across the mobile communication system for satisfying one or more application-specific policies, the network node including:
- at least one network interface (NIC) module configured to exchange one or more data packets with other network nodes (ST1, GS) across the mobile communication system;
- an underlay plane module (UP) configured to,
- pass the one or more data packets through the network node according to provider-specific rules in a default configuration, and,
- exchange the one or more data packets with an overlay plane module;
- the overlay plane module (OP) implemented to enforce at least one application-specific policy imposed to at least one of a routing, prioritizing, forwarding, and dropping of the one or more data packets in accordance with a traffic requirement assigned to the one or more data packets.

2. The network node according to claim 1, the overlay plane module (OP) configured to aggregate data packets exchanged with other networking nodes and to prioritize one or more data packets according to at least one traffic requirement assigned to one or more data packets.

3. The network node according to one of the aforementioned claims, the overlay plane module (OP) configured to aggregate data packets exchanged with other networking nodes and to determine a consecutive network node for forwarding one or more data packets according to at least one traffic requirement assigned to at least one or more data packets.

4. The network node according to one of the aforementioned claims, the overlay plane module (OP) configured to aggregate data packets exchanged with other networking nodes and determine a prioritized route for forwarding one or more data packets being assigned by a time-sensitive or a critical traffic requirement.

5. The network node according to one of the aforementioned claims, the overlay plane module (OP) configured to aggregate data packets exchanged with other networking nodes and determine a non-prioritized route for forwarding one or more data packets being assigned by a non-time-sensitive requirement.

6. The network node according to one of the aforementioned claims, the overlay plane module (OP) configured to receive resource information and/or congestion warnings from other network nodes and determine an optimized route for forwarding one or more data packets.

7. The network node according to one of the aforementioned claims, the overlay plane module (OP) configured to drop packets for save networking resources in accordance with one of said application-specific policy.

8. A satellite including a network node according to one of the aforementioned claims 1 to 7.

9. A ground station including a network node according to one of the aforementioned claims 1 to 7.

10. A communication system comprising at least one network node according to one of the aforementioned claims, the communication system including:
- an underlay plane including at least one underlay plane module (UP);
- a network interface layer including at least one network interface (NIC); and;
- an interface layer configured as an endpoint for exchanging one or more data packets with at least one application (APP).
